# EUROPEAN PATENT APPLICATION

(11) **EP 4 318 752 A1**
(43) Date of publication of application: **07.02.2024**
(21) Application number: 22926372.8
(22) Date of filing: 15.02.2022
(51) Int. Cl.: H01M 50/188, H01M 50/184, H01M 50/186

(54) **END CAP ASSEMBLY, BATTERY CELL, BATTERY, AND APPARATUS USING BATTERY**

(71) Applicant: Contemporary Amperex Technology Co., Limited, Ningde, Fujian 352100 (CN)
(72) Inventor: SU, Huasheng, Ningde, Fujian 352100 (CN); LI, Quankun, Ningde, Fujian 352100 (CN); XING, Chengyou, Ningde, Fujian 352100 (CN); WANG, Peng, Ningde, Fujian 352100 (CN); JIN, Haizu, Ningde, Fujian 352100 (CN)
(74) Representative: Thoma, Michael
(86) International application number: PCT/CN2022/076293
(87) International publication number: WO 2023/155034

(57) **Abstract**

An end cap assembly, a battery cell, a battery, and an electrical device are disclosed. The end cap assembly applicable to a battery cell includes: a cover plate (110), configured to close a housing (300); a terminal plate (150), located on a side of the cover plate (110), the side being away from the housing (300); a first insulation component (120), at least partially located between the terminal plate (150) and the cover plate (110); an electrode terminal (140), penetrating the cover plate (110) and the first insulation component (120), and connected to the terminal plate (150); and a sealing element (130), including a sealing portion (132) and a connecting portion (131) connected to the sealing portion (132). The sealing portion (132) is disposed between a first insulation component (120) and the cover plate (110) to form a sealing region around the electrode terminal (140). At least one of the first insulation component (120) or the cover plate (110) includes an accommodation recess (121). At least a part of the connecting portion (131) is accommodated in the accommodation recess (121) to fixedly fit the accommodation recess (121).

## Description

### TECHNICAL FIELD

This application relates to the field of battery technology, and in particular, to an end cap assembly, a battery cell, a battery, and an electrical device.

### BACKGROUND

Currently, secondary batteries are widely used in electronic devices such as a mobile phone and a notebook computer by virtue of advantages such as a high energy density and environmental friendliness. With the vigorous development of the new energy technology, the application of secondary batteries has been rapidly spread to gasoline-electric hybrid vehicles, electric vehicles, and energy storage systems.

During manufacturing of a secondary battery, an electrolyte solution needs to be injected into the interior of the secondary battery along an injection port. During the injection of the electrolyte solution, the electrolyte solution may flow into a gap between an electrode terminal and an cover plate, thereby causing a safety hazard.

### SUMMARY

According to one aspect of the present disclosure, an end cap assembly applicable to a battery cell is provided, including: a cover plate, configured to close a housing of the battery cell; a terminal plate, located on a side of the cover plate, the side being away from the housing; a first insulation component, at least partially located between the terminal plate and the cover plate; an electrode terminal, penetrating the cover plate and the first insulation component, connected to the terminal plate, and configured to input or output electrical energy; and a sealing element, including a sealing portion and a connecting portion connected to the sealing portion. The sealing portion is disposed between a first insulation component and the cover plate to form a sealing region around the electrode terminal. At least one of the first insulation component or the cover plate includes an accommodation recess. At least a part of the connecting portion is accommodated in the accommodation recess to fixedly fit the accommodation recess.

In an embodiment of this application, the sealing portion of the sealing element can form a sealing region around the electrode terminal and between the first insulation component and the cover plate, thereby playing a role in blocking an electrolyte solution, and preventing the electrolyte solution from entering the space between the cover plate and the electrode terminal along a gap between the electrode terminal and the cover plate during injection of the electrolyte solution into a battery. This effectively reduces the possibility of electronic conduction between the cover plate or the housing of the battery cell and the electrode terminal due to existence of by-products of the electrolyte solution, and enhances safety performance of the battery cell. In addition, at least a part of the connecting portion of the sealing element is accommodated in the accommodation recess in at least one of the first insulation component or the cover plate. The fixed fit relationship between the accommodation recess and the connecting portion increases the strength of bonding between the sealing element and at least one of the first insulation component or the cover plate, where the at least one includes an accommodation recess, thereby improving the structural reliability of the battery.

In some embodiments, the connecting portion assumes a columnar shape, and all cross-sections of the connecting portion are equal in area.

In these embodiments, the columnar connecting portion with an equalized cross-sectional area is simple in structure and facilitates manufacturing and molding.

In some embodiments, the connecting portion includes a first connecting section and a second connecting section. The second connecting section is located on a side of the first connecting section, the side being away from the sealing portion. A cross-sectional area of the second connecting section is larger than a cross-sectional area of the first connecting section.

In these embodiments, the second connecting section of the connecting portion is farther away from the sealing portion than the first connecting section, and is larger than the first connecting section in cross-sectional area. On the one hand, this increases a contact area between the connecting portion and the accommodation recess, and increases the strength of fixed bonding. On the other hand, this forms a compression component force between the second connecting section and the accommodation recess in a depth direction of the accommodation recess, so that the fixed connection between the connecting portion and the accommodation recess is tighter and less prone to fall apart.

In some embodiments, the cover plate includes a first surface and a sealing recess recessed in the first surface. At least a part of the sealing portion is accommodated in the sealing recess. The first insulation component includes a second surface opposite to the first surface and an accommodation recess recessed in the second surface. The accommodation recess includes an opening on both the second surface and a third surface of the first insulation component, where the third surface is located on a side away from the cover plate.

In these embodiments, the thickness of the cover plate is generally greater than the thickness of the first insulation component. Therefore, the sealing recess created in the first surface of the cover plate little impairs the strength and processing convenience of the cover plate. The accommodation recess is opened on both the second surface and the third surface, so that the second connecting section of the connecting portion can be exposed from the opening on the third surface. This structure effectively simplifies the molding process of the sealing element and the first insulation component, and lowers the requirement on complexity of a mold.

In some embodiments, a longitudinal section of the accommodation recess is in an inverted L shape or a T shape.

In these embodiments, the accommodation recess with an inverted-L-shaped or T-shaped longitudinal section forms a stepped cavity. In the stepped cavity, a relatively wide part corresponds to a relatively wide second connecting section, and a relatively narrow part corresponds to a relatively narrow first connecting section. In this way, on the one hand, the accommodation recess can match the connecting portion that includes the first connecting section and the second connecting section. On the other hand, a compression component force can be formed in the depth direction of the accommodation recess through the second connecting section and the stepped part at which the wide part meets the narrow part, thereby increasing the tightness of the fixed connection between the connecting portion and the accommodation recess.

In some embodiments, the sealing portion at least partially covers an opening of the accommodation recess.

In these embodiments, the sealing portion at least partially covers the opening of the accommodation recess, thereby increasing the connection area between the sealing element and the accommodation recess, and between the sealing element and a surface of the accommodation recess outside the opening, increasing the bonding strength, making the sealing portion be supported by the surface outside the opening, and improving the connection stability.

In some embodiments, the sealing portion fully covers the opening of the accommodation recess, and a width of the sealing portion is greater than a width of the opening of the accommodation recess.

In these embodiments, the relatively wide sealing portion fully covers the sealing recess, so that the sealing portion is more stably supported by the surface outside the opening.

In some embodiments, the connecting portion is in fit with an inner wall of the accommodation recess without clearance.

In these embodiments, the connecting portions fills the accommodation recess and is in fit with the inner wall of the accommodation recess without clearance, thereby achieving a larger contact area between the connecting portion and the accommodation recess, and in turn, improving the tightness of the fixed connection.

In some embodiments, the sealing portion assumes a closed ring structure, and the accommodation recess includes a plurality of holes spaced apart along a circumferential direction of the closed ring structure.

In these embodiments, the closed-ring-shaped sealing portion in the sealing element can form a closed-ring-shaped sealing region to ensure a good sealing effect. The connecting portion in the sealing element can be connected to a plurality of holes included in the accommodation recess and spaced apart along a circumferential direction of the closed ring structure. In this way, a bonding force of the fixed connection between the connecting portion and the accommodation recess is discretely distributed in the circumferential direction of the closed ring structure, the bonding force is distributed more uniformly, and the overall bonding strength is increased.

In some embodiments, the plurality of holes are arranged symmetrically with respect to a centerline of the closed ring structure in at least one direction.

In these embodiments, the plurality of holes in the accommodation recess may be arranged symmetrically with respect to the centerline of a plane in which the closed ring structure is located, where the centerline is in one direction or two directions perpendicular to each other. In this way, the bonding force by which the plurality of holes are connected to the connecting portion can keep uniform in the one direction or the two directions perpendicular to each other, and therefore, the holes are less prone to be disconnected from the connecting portion.

In some embodiments, a sum of lengths of the plurality of holes in the circumferential direction of the closed ring structure is less than a sum of lengths of all solid parts between every two adjacent holes in the circumferential direction of the closed ring structure.

In these embodiment, in the circumferential direction of the closed ring structure, the sum of the lengths of the solid parts between every two adjacent holes is set to be greater than the sum of the lengths of the holes, thereby ensuring relatively high strength of the surface with the accommodation recess, and reducing or avoiding the risk of falling off together with the connecting portion as a whole due to insufficient strength of the surface.

In some embodiments, cross-sectional shapes of the accommodation recess include at least one of a polygon, a circle, an ellipse, or a sector ring.

In these embodiments, at least one of various cross-sectional shapes may be selected depending on various factors such as the location and size of the accommodation recess, thereby improving the adaptability of the connection structure.

In some embodiments, the cover plate includes a first through-hole. The first insulation component includes a second through-hole. The electrode terminal penetrates the first through-hole and the second through-hole along a thickness direction of the cover plate. Both the first through-hole and the second through-hole are located in the sealing region.

In these embodiments, the electrode terminal is connected to the terminal plate after penetrating the through-holes on the cover plate and the first insulation component successively. In this way, a reliable press-fit relationship is formed between the cover plate and the first insulation component to ensure that the sealing element forms a sealing region around the electrode terminal and between the first insulation component and the cover plate, and the electrolyte solution is prevented from flowing to the electrode terminal from the gap between the electrode terminal and the cover plate when being injected into the battery, thereby effectively reducing safety hazards.

In some embodiments, a material of the sealing element is different from a material of the at least one of the first insulation component or the cover plate, the at least one including the accommodation recess.

In these embodiments, the material of the sealing element is different from the material of at least one of the first insulation component or the cover plate, where the at least one includes an accommodation recess, so as to meet various requirements such as sealing degree, molding process, and cost, and improve the design flexibility.

In some embodiments, the sealing element is formed in one piece together with the at least one of the first insulation component or the cover plate through an injection molding process, the at least one including the accommodation recess.

In these embodiments, the sealing element is injection-molded in one piece together with the at least one of the first insulation component or the cover plate, the at least one including the accommodation recess. In this way, high bonding strength is achieved in a relatively small assembling space, the bonding force is increased, the assembling steps are simplified, and the production efficiency is improved.

In some embodiments, hardness of the material of the sealing element is lower than hardness of the material of the at least one of the first insulation component or the cover plate, the at least one including the accommodation recess.

In these embodiments, the sealing element is made of a material of relatively low hardness, so that a better sealing effect can be achieved through deformation of the sealing element when the first insulation component is in press-fit with the cover plate.

According to one aspect of the present disclosure, a battery cell is provided, including: an electrode assembly; a housing, configured to accommodate the electrode assembly, where an end portion of the housing is opened; and the end cap assembly described above, where the end cap assembly is disposed at the end portion of the housing.

In an embodiment of this application, with the end cap assembly based on the above technical solution, the battery cell can effectively prevent the housing from being electrified, and achieve higher structural stability.

In some embodiments, the battery cell further includes: a negative end cap assembly, located on one side of the electrode assembly; and a positive end cap assembly, located on another side of the electrode assembly, where both end portions of the housing are opened. The negative end cap assembly and the positive end cap assembly fit and cover the two end portions of the housing respectively. The negative end cap assembly is the specified end cap assembly.

In these embodiments, to avoid corrosion of the housing that is prone to occur when the negative electrode terminal is electronically connected to the housing, the above technical solution uses the specified end cap assembly as the negative end cap assembly, thereby effectively preventing the housing from being electrified and improving the performance of the battery cell.

In some embodiments, the positive end cap assembly includes an injection port.

In these embodiment, the positive end cap assembly includes an injection port, and the negative electrode employs the end cap assembly disclosed above and including a sealing element, thereby making the structural arrangement of the battery cell more reasonable.

According to one aspect of the present disclosure, a battery is provided. The battery includes the battery cell described above.

In an embodiment of this application, the battery obtains energy from the above battery cell, thereby effectively preventing the housing from being electrified and improving the performance of the battery.

According to one aspect of the present disclosure, an electrical device is provided. The electrical device includes the battery described above.

In an embodiment of this application, the electrical device obtains energy from the above battery, thereby effectively preventing the housing from being electrified and improving the performance of the electrical device.

### BRIEF DESCRIPTION OF DRAWINGS

The drawings as a part of the specification illustrate some embodiments of the present disclosure and are used together with the specification to interpret the principles of the present disclosure.

The present disclosure can be more clearly understood from the following detailed description with reference to the drawings, in which:
FIG. 1 is a schematic structural diagram of an electrical device according to some embodiments of the present disclosure;
FIG. 2 is a schematic assembly diagram of a battery cell according to some embodiments of the present disclosure;
FIG. 3 is a schematic exploded view of a battery cell according to some embodiments of the present disclosure;
FIG. 4 is a schematic exploded view of an end cap assembly according to some embodiments of the present disclosure;
FIG. 5A is a schematic structural diagram of an end cap assembly viewed in a thickness direction according to some embodiments of the present disclosure;
FIG. 5B is a cross-sectional schematic view of FIG. 5A sectioned along an A-A line;
FIG. 5C is a close-up view of a region B shown in FIG. 5B;
FIG. 6A and FIG. 6B are schematic exploded views of a first insulation component and a sealing element of an end cap assembly viewed from different angles respectively according to some embodiments of the present disclosure;
FIG. 6C is a schematic assembly diagram of FIG. 6B;
FIG. 6D is a schematic structural diagram of FIG. 6C viewed from a thickness direction;
FIG. 6E is a cross-sectional schematic view of FIG. 6D sectioned along a C-C line;
FIG. 6F is a close-up view of a region D shown in FIG. 6E;
FIG. 7A and FIG. 7B are schematic exploded views of a first insulation component and a sealing element of an end cap assembly viewed from different angles respectively according to some other embodiments of the present disclosure;
FIG. 7C is a schematic assembly diagram of FIG. 7B;
FIG. 7D is a schematic structural diagram of FIG. 7C viewed from a thickness direction;
FIG. 7E is a cross-sectional schematic view of FIG. 7D sectioned along an E-E line;
FIG. 7F is a close-up view of a region F shown in FIG. 7E;
FIG. 8A and FIG. 8B are schematic exploded views of a first insulation component and a sealing element of an end cap assembly viewed from different angles respectively according to some other embodiments of the present disclosure;
FIG. 8C is a schematic assembly diagram of FIG. 8B;
FIG. 8D is a schematic structural diagram of FIG. 8C viewed from a thickness direction;
FIG. 8E is a cross-sectional schematic view of FIG. 8D sectioned along a G-G line; and
FIG. 8F is a close-up view of a region H shown in FIG. 8E.

Understandably, the dimensions of various parts shown in the drawings are not drawn to scale. In addition, identical or similar reference numerals represent identical or similar components.

### List of reference numerals:

1. battery cell; 100. end cap assembly; 100P. positive end cap assembly; 100N. negative end cap assembly; 1000. battery;
110. cover plate; 111. sealing recess; 112. first surface; 113. injection port; 114. first through-hole; 115. explosion-proof hole; 116. explosion-proof sticker;
120. first insulation component; 121. accommodation recess; 122. second surface; 123. second through-hole; 124. third surface;
130. sealing element; 131. connecting portion; 131a. first connecting section; 131b. second connecting section; 132. sealing portion;
140. electrode terminal;
150. terminal plate; 151. third through-hole;
160. second insulation component; 161. fourth through-hole; 162. explosion-proof valve;
170. O-ring;
180. current collecting plate;
200. electrode assembly;
300. housing; 310. cavity.

### DETAILED DESCRIPTION OF EMBODIMENTS

The following describes in detail some exemplary embodiments of the present disclosure with reference to the drawings. The following description of exemplary embodiments is merely illustrative, and is in no way intended as a limitation on the present disclosure or the use thereof. The present disclosure may be implemented in many different forms without being limited to the embodiments described herein. These embodiments are provided to enable thorough and complete understanding of the present disclosure, and sufficiently convey the scope of the present disclosure to those skilled in the art. It is hereby noted that, unless otherwise expressly specified, the relative arrangement of components and steps, ingredients of a material, numerical expressions, and numerical values set forth in such embodiments are to be construed as merely exemplary rather than restrictive.

"First", "second", and similar words used in the present disclosure do not indicate any order, quantity, or importance, but are merely used to distinguish different parts. "Perpendicular" does not means exact perpendicularity, but means perpendicularity falling within an error tolerance range. "Parallel" does not mean exact parallelism, but means parallelism falling within an error tolerance range.

A term like "including" or "comprising" means that the element preceding the term covers the elements listed after the term, but does not exclude other elements. The terms such as "top", "bottom", "up", "down", "left", "right", "in", and "out" indicating a direction or a position relationship are merely intended for ease or brevity of description of this application, but do not indicate or imply that the mentioned device or component is necessarily located in the specified direction or constructed or operated in the specified direction. Therefore, such terms are not to be understood as a limitation on this application. When an absolute position of a described object changes, the relative position relationship may also change accordingly.

In the present disclosure, reference to a specific device being located between a first device and a second device may mean that an intermediate device may exist or not between the specific device and the first device or the second device. Reference to a specific device being connected to another device means that the specific device may be directly connected to the other device without an intermediate device, or may be connected to the other device through an intermediate device rather than directly.

Unless otherwise expressly defined, all terms (including technical and scientific terms) used herein bear the same meanings as what is understood by a person of ordinary skill in the field of the present disclosure. Understandably, unless otherwise expressly defined herein, the terms defined in, for example, a general-purpose dictionary needs to be construed as bearing the meanings consistent with the meanings thereof in the context of the related art, rather than construed as idealized or extremely formalized meanings.

The technologies, methods, and devices known to a person of ordinary skill in the related art may be described without going into details, but as appropriate, such technologies, methods, and device are regarded as a part of the specification.

In the related art, an electrolyte solution needs to be injected into a battery cell. The inventor hereof finds that, after the electrolyte solution is injected into the battery cell, the electrolyte solution flows downward in a gravity direction along a housing of the battery cell under the action of the gravity of the electrolyte solution and external injection power. When the amount of electrolyte solution at the bottom of the battery cell is sufficient, the electrolyte solution overflows toward the injection port from the bottom of the battery cell along an interlayer of the battery cell, that is, flows upward. When the electrolyte solution overflows to an upper surface of a cover plate, the electrolyte solution may flow along a gap between the cover plate and a first insulation component toward a mounting hole at which the electrode terminal is mounted.

A gap originally exists between an inner wall of the mounting hole of the cover plate and an outer wall of the electrode terminal. If the electrolyte solution enters the gap, the electrode terminal is ionically conductive to the cover plate and the housing due to the existence of the electrolyte solution. The existence of the electrolyte solution gives rise to by-products in the battery cell. The by-products are attached to the insulation component between the electrode terminal and the cover plate or housing, so that the electrode terminal is electronically connected to the cover plate and the housing. If electrons are conducted between a positive electrode post and the housing, the housing will be positively charged. That is, a positive electrode and the housing are at the same potential. If electrons are conducted between a negative electrode post and the housing, the housing will be negatively charged. That is, the positive electrode and the negative electrode are at the same potential. The housing being at a low potential or a high potential brings some safety hazards. Moreover, the housing being in a low potential may cause the housing to be corroded and leak electrolyte solution.

To reduce or even eliminate the phenomenon of electronic conduction between the electrode terminal and the cover plate or housing, the inventor puts forward a technical solution in which a sealing region is formed around the electrode terminal by a sealing element to seal the electrode terminal and enhance the safety performance of the battery cell. During the use and transportation of the battery cell, when the end cap assembly is subjected to an external force, it is necessary to ensure reliability of the sealing region formed by the sealing element, and avoid safety hazards caused by the detachment of the sealing element. In view of this, the inventor provides the following technical solution to solve the above technical problem.

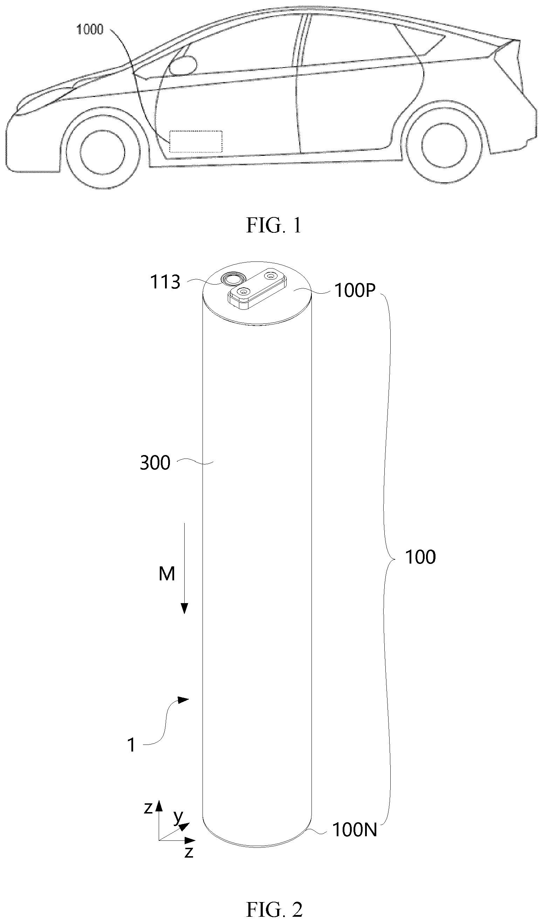

FIG. 1 is a schematic structural diagram of an electrical device according to some embodiments of the present disclosure. Referring to FIG. 1, an embodiment of the present disclosure provides an electrical device. The electrical device may be a vehicle, a mobile phone, a portable device, a notebook computer, a ship, a spacecraft, an electric toy, a power tool, or the like. The vehicle may be an oil-fueled vehicle, a natural gas vehicle, or a new energy vehicle. The new energy vehicle may be a battery electric vehicle, a hybrid electric vehicle, a range-extended electric vehicle, or the like. The spacecraft may be an airplane, a rocket, a space shuttle, a spaceship, or the like. The electric toy may be a stationary or mobile electric toy, such as a game console, an electric car toy, an electric ship toy, an electric airplane toy, and the like. The power tool may be an electrical metal cutting tool, an electrical grinding tool, an electrical assembling tool, or a power tool for use in railways. Examples of the power tool are an electrical drill, an electrical grinder, an electrical wrench, an electrical screwdriver, an electrical hammer, an electrical impact drill, a concrete vibrator, an electrical planer, or the like. The electrical device is not particularly limited in embodiments of the present invention.

For ease of description in the following embodiments, a vehicle is used as an example of the electrical device.

Referring to FIG. 1, a battery 1000 is disposed inside the vehicle. The battery 1000 may be disposed at the bottom, front, or rear of the vehicle. The battery 1000 is configured to supply power to the vehicle. For example, the battery 1000 serves as an operating power supply of the vehicle. The battery 1000 may be used as a power supply of a device such as a new energy vehicle, watercraft, or a smart electrical cabinet. The battery 1000 may also be used as a power supply component to provide required electric energy to various electrical components of the device.

In some embodiments, the battery 1000 includes a box and one or more battery cells disposed in the box. The battery cells are electrically connected to each other, for example, in series, parallel, or series-and-parallel pattern, so as to achieve the desired values of electrical performance indicators of the battery 1000. A plurality of battery cells are arranged in a row. One or more rows of battery cells may be arranged in the box as required.

The following describes an arrangement form of the battery cells of the battery 1000. In some embodiments, the battery cells of the battery 1000 are arranged along a length direction of the box. Six rows of battery cells are arranged along a width direction of the battery 1000. In practical applications, the number of rows may be another value. As required, one or more layers of battery cells may be arranged in the height direction of the battery 1000 instead.

In some embodiments, the plurality of battery cells are connected in series, parallel, or series-and-parallel pattern to form a battery module first, and then a plurality of battery modules are connected in series, parallel, or series-and-parallel pattern to form an entirety that is to be accommodated in the box. In some other embodiments, all battery cells are directly connected in series, parallel, or series-and-parallel pattern, and then a whole of all battery cells is accommodated in the box.

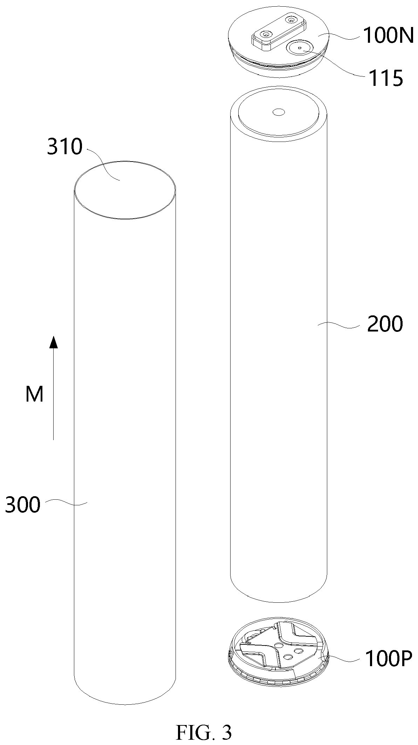

FIG. 2 is a schematic assembly diagram of a battery cell according to some embodiments of the present disclosure. FIG. 3 is a schematic exploded view of a battery cell according to some embodiments of the present disclosure. To describe the technical solutions of each embodiment of the present disclosure more clearly, a coordinate system is established in FIG. 2. The subsequent description about various orientations of the battery cell may be based on this coordinate system. Referring to FIG. 2, a z-axis represents a height direction of the battery cell, an x-axis and y-axis are both perpendicular to a z-axis, and are perpendicular to each other. The surface of the cover plate of the battery cell may be parallel to an xy plane. In the subsequent description of the present disclosure, the terms "up" and "down" may be understood with reference to the z-axis direction. In addition, a cross-section and a longitudinal section to be mentioned later mean that, benchmarked against a reference direction, a section formed by sectioning along a direction perpendicular to the reference direction is a cross-section, and a section formed by sectioning along a direction parallel to the reference direction is a longitudinal section.

Referring to FIG. 2 and FIG. 3, an embodiment of the present disclosure provides a battery cell 1. The battery cell 1 may be included in each preceding embodiment of the electrical device that uses a battery 1000. The battery cell 1 includes an end cap assembly 100, an electrode assembly 200, and a housing 300. The housing 300 is configured to accommodate the electrode assembly 200. An end portion of the housing 300 is opened. The end cap assembly 100 is disposed at the end portion of the housing 300. For example, in FIG. 3, the housing 300 includes a cavity 310. The electrode assembly 200 is mounted in the cavity 310 of the housing 300.

The number of the end cap assemblies 100 may be one or two, depending on the number of openings at the end portion of the housing 300. For example, when both ends of the housing 300 are opened, the number of end cap assemblies 100 is two, of which one is located at one end of the battery cell 1 along the z-axis direction, and the other is located at another end of the battery cell 1 along the z-axis direction. A thickness direction of the end cap assembly 100 is parallel to the z-axis direction.

A battery cell 1 includes an electrode assembly 200 and an electrolyte solution in addition to the end cap assembly 100 and the housing 300. The electrode assembly 200 may be primarily formed of a positive electrode plate, a negative electrode plate, and a separator. The structural forms of the electrode assembly 200 include a stacked type and a jelly-roll type. The stacked-type electrode assembly is formed in the following way: cutting a positive electrode plate, a negative electrode plate, and a separator into specified sizes, and then stacking and fitting the positive electrode plate, the separator, and the negative electrode plate to form an electrode assembly. The jelly-roll electrode assembly is formed by winding the positive electrode plate, the negative electrode plate, and the separator.

In some of the embodiments to be described later, the battery cell employs a jelly-roll electrode assembly as an example, and therefore, the housing 300 is cylindrical. The end cap assembly 100 is roughly circular to fit the shape of the openings at both ends of the housing 300. The battery cell 1 works primarily by shuttling metal ions between the positive electrode plate and the negative electrode plate. The positive electrode plate includes a positive current collector and a positive active material layer. A surface of the positive current collector is coated with the positive active material layer. Of the positive current collector, a part uncoated with the positive active material layer protrudes from a part coated with the positive active material layer. The part, uncoated with the positive active material layer, of the positive current collector, serves as a positive tab.

Using a lithium-ion battery as an example, the positive current collector may be made of aluminum, and a positive active material may be lithium cobalt oxide, lithium iron phosphate, ternary lithium, lithium manganese oxide, or the like. The negative electrode plate includes a negative current collector and a negative active material layer. A surface of the negative current collector is coated with the negative active material layer. Of the negative current collector, a part uncoated with the negative active material layer protrudes from a part coated with the negative active material layer, and the part uncoated with the negative active material layer serves as a negative tab. The negative current collector may be made of copper, and a negative active material may be carbon, silicon, or the like. In order to ensure passage of a large current without fusing off, the positive tab is plural in number, and the plurality of positive tabs are stacked together; the negative tab is plural in number, and the plurality of negative tabs are stacked together. The separator may be made of a material such as PP (polypropylene, polypropylene) or PE (polyethylene, polyethylene).

The arrow direction M in FIG. 2 and FIG. 3 is a flow direction of the electrolyte solution being injected into the battery cell. Correspondingly, the orientation of the battery cell shown in FIG. 2 is opposite to the orientation shown in FIG. 3, so as to show the end cap assemblies connected at both ends of the housing 300.

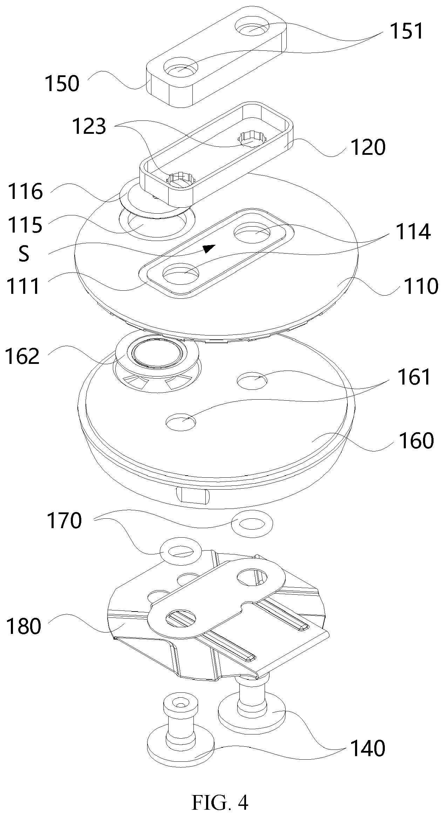

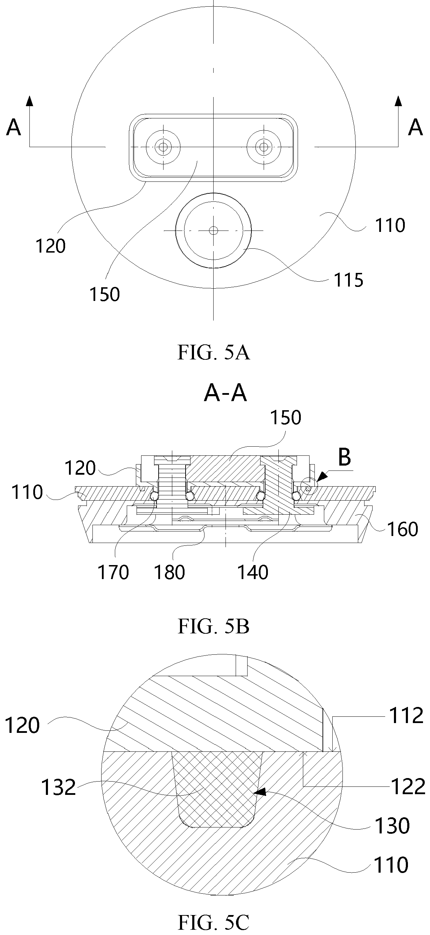

FIG. 4 is a schematic exploded view of an end cap assembly according to some embodiments of the present disclosure. Referring to FIG. 2 to FIG. 4 in conjunction with the embodiments shown in FIG. 5A to FIG. 8F, an embodiment of the present disclosure provides an end cap assembly applicable to a battery cell. The end cap assembly may be included in the battery cell 1 according to each of the embodiments described above. The end cap assembly includes a cover plate 110, a terminal plate 150, a first insulation component 120, an electrode terminal 140, and a sealing element 130.

The cover plate 110 is configured to close a housing 300 of the battery cell. The terminal plate 150 is located on a side of the cover plate 110, the side being away from the housing 300. The first insulation component 120 is at least partially located between the terminal plate 150 and the cover plate 110. The electrode terminal 140 penetrates the cover plate 110 and the first insulation component 120, and is connected to the terminal plate 150 and configured to input or output electrical energy.

The sealing element 130 includes a sealing portion 132 and a connecting portion 131 connected to the sealing portion 132. The sealing portion 132 is disposed between a first insulation component 120 and the cover plate 110 to form a sealing region S around the electrode terminal 140. At least one of the first insulation component 120 or the cover plate 110 includes an accommodation recess 121. At least a part of the connecting portion 131 is accommodated in the accommodation recess 121 to fixedly fit the accommodation recess 121.

In this embodiment, the sealing portion of the sealing element can form a sealing region around the electrode terminal and between the first insulation component and the cover plate, thereby playing a role in blocking an electrolyte solution, and preventing the electrolyte solution from entering the space between the cover plate and the electrode terminal along a gap between the electrode terminal and the cover plate during injection of the electrolyte solution into a battery. This effectively reduces the possibility of electronic conduction between the cover plate or the housing of the battery cell and the electrode terminal due to existence of by-products of the electrolyte solution, and enhances safety performance of the battery cell.

In addition, at least a part of the connecting portion of the sealing element is accommodated in the accommodation recess in at least one of the first insulation component or the cover plate. The fixed fit relationship between the accommodation recess and the connecting portion increases the strength of bonding between the sealing element and at least one of the first insulation component or the cover plate, where the at least one includes an accommodation recess, thereby improving the structural reliability of the battery.

In some embodiments, the number of electrode terminals 140 is at least one, and at least one electrode terminal 140 may be disposed in the sealing region S. Based on the number of electrode terminals 140, the structure of the electrode terminals of the end cap assembly 100 may be a single-electrode-terminal structure or a double-electrode-terminal structure.

Using the double-electrode-terminal structure as an example, referring to FIG. 4, FIG. 5A, and FIG. 5B, the number of electrode terminals is two, and both electrode terminals are located in the sealing region S. This double-electrode-terminal structure can prevent the end cap assembly 100 from rotating relative to the housing 300 after being mounted. For the double-electrode-terminal structure, if the electrolyte solution exists between both electrode terminals 140 and the cover plate 110, electrons will be conducted between the two electrode terminals, thereby electrifying the housing 300. The sealing portion forms a sealing region around the two electrode terminals between the first insulation component and the cover plate to effectively prevent the electrolyte solution from reaching a position that can contact the two electrode terminals.

Referring to FIG. 3, in some embodiments, the battery cell 1 includes two end cap assemblies: a negative end cap assembly 100N, and a positive end cap assembly 100P. The negative end cap assembly 100N is located on one side of the electrode assembly 100, and the positive end cap assembly 100P is located on another side of the electrode assembly 100. Both end portions of the housing 300 are opened. The negative end cap assembly 100N and the positive end cap assembly 100P fit and cover the two end portions of the housing 300 respectively.

The negative end cap assembly 100N and the positive end cap assembly 100P may be the end cap assembly embodiment according to the present disclosure, so as to prevent the housing 300 of the battery cell from being electrified. Considering that the negatively charged housing 300 may cause corrosion and electrolyte leakage of the battery cell 1 and result in a shorter lifespan and relatively high safety hazards, the negative end cap assembly 201 may be the end cap assembly embodiment according to the present disclosure. In this way, under the sealing effect of the sealing element 130, electronic conduction between the housing 300 and the electrode terminal 140 through the by-products produced by the electrolyte solution is avoided, thereby preventing the housing 300 from being negatively charged, and in turn, effectively reducing the possibility of corrosion of the housing 300, increasing the lifespan of the battery cell, and improving safety.

In some embodiments, the positive end cap assembly 100P includes an injection port 113. The negative end cap assembly 100N and the positive end cap assembly 100P each are disposed at the opening of one end of the housing 300 to close the opening at this end of the housing 300. In addition, the end cap assembly 200 is electrically connected to a tab of the electrode assembly 100. When the negative end cap assembly 201 is the end cap assembly embodiment according to the present disclosure, the injection port 113 created in the positive end cap assembly 100P makes the structural arrangement of the battery cell more reasonable.

Referring to FIG. 4, FIG. 5B, and FIG. 5C, the sealing region S is actually a closed space defined by the sealing element 130 after the first insulation component 120 and the cover plate 110 are assembled. In this way, an entire space formed between the first insulation component 120 and the cover plate 110 is divided by the sealing element 130 into inside and outside of the sealing region S.

Correspondingly, in some embodiments, the cover plate 110 includes a first through-hole 114. The first insulation component 120 includes a second through-hole 123. The electrode terminal 140 penetrates the first through-hole 114 and the second through-hole 123 along a thickness direction of the cover plate 110. Both the first through-hole 114 and the second through-hole 123 are located in the sealing region S. In this way, the electrode terminal passing through the closed space is located in the sealing region S, and is isolated from the outside of the sealing region by the sealing element 130.

Referring to FIG. 4, FIG. 5A, and FIG. 5B, the cover plate 110 may be configured as a flat plate structure. The first insulation component 120 may be configured to include at least a bottom plate that assumes a rectangular flat plate structure. In some embodiments, the cover plate 110 includes a first surface 112 and a sealing recess 111 recessed in the first surface 112. The sealing element 130 is fixedly connected to the first insulation component 120 through the fit between the connecting portion and the accommodation recess, and at least a part of the sealing portion 132 of the sealing element 130 is caused to be embedded in the sealing recess 111 without clearance. The sealing recess 111 may be formed as a closed ring shown in FIG. 4. A sealing region S is defined by the closed ring.

In some other embodiments, the sealing recess may be created in the second surface 122 on the first insulation component 120, where the second surface is opposite to the first surface 112 of the cover plate 110. In addition, the sealing element 130 is fixedly connected to the cover plate 110 through the fit between the connecting portion and the accommodation recess, and at least a part of the sealing portion 132 of the sealing element 130 is caused to be embedded in the sealing recess without clearance. In some other embodiments, the sealing recess may be omitted, but the sealing region is formed by just pressing the sealing portion of the sealing element 130 against the opposite surface. Alternatively, the accommodation recess is created in opposite surfaces of both the first insulation component 120 and the cover plate 110 separately, so as to accommodate at least a part of the connecting portion of the sealing element separately.

In FIG. 3 and FIG. 4, the cover plate 11 may further include an explosion-proof hole 115 located outside the sealing region S. The explosion-proof hole 115 may be configured to mount an explosion-proof valve 162. An explosion-proof sticker 116 may be affixed to the outside of the explosion-proof valve 162. The explosion-proof hole 115 may also be used as an injection port concurrently. For example, during the manufacturing, the electrolyte solution is injected into the interior of the battery cell 1 through the explosion-proof hole 115. After completion of manufacturing the battery, the explosion-proof valve 162 is mounted, and the explosion-proof sticker 116 is affixed to the outside of the explosion-proof valve 162.

The first insulation component 120 may further include vertical plates that surround lateral edges of the bottom plate. An accommodation structure configured to accommodate the terminal plate 150 is formed by the vertical plates and the bottom plate. The bottom plate and the vertical plates may be made of the same material or different materials. The terminal plate 150 includes a third through-hole 151. In this way, along a thickness direction of the cover plate 110, the electrode terminal 140 passes through the first through-hole 114 and the second through-hole 123 and then passes through the third through-hole 151. In addition, the compression between the components such as the terminal plate 150, the first insulation component 120, and the cover plate 110 may be implemented through the fixed connection of the electrode terminal 140 on the terminal plate 150. The terminal plate 150 may be made of a metallic conductive material such as aluminum.

To prevent the electrolyte solution from leaking out of the battery cell 1 along the first through-hole 114 and the second through-hole 123, referring to FIG. 4 and FIG. 5B, the end cap assembly 100 may further include an O-ring 170 mounted in the first through-hole 114 and sleeved around the electrode terminal 140 to prevent the electrolyte solution in the battery cell from leaking through the through-hole.

In FIG. 4 and FIG. 5B, the end cap assembly 200 may further include a second insulation component 160 and a current collecting plate 180. The second insulation component 160 is located on a side of the cover plate 110, the side being away from the first insulation component 120. The second insulation component may be assembled in conjunction with the cover plate 110 and fixed to the housing 300. The current collecting plate 180 is located on a side of the second insulation component 160, the side being away from the cover plate 110, so as to implement transit connection of the electrode terminal.

In the above embodiment, both the first insulation component 120 and the second insulation component 160 may be made of a material that is insulative and resistant to the electrolyte solution, for example, polypropylene (Polypropylene, PP for short), polycarbonate (Polycarbonate, PC for short), polyfluoroalkoxy (Polyfluoroalkoxy, PFA for short), polyvinyl chloride (Polyvinyl chloride, PVC for short), polyethylene (PE for short), or polyethylene terephthalate (PET for short).

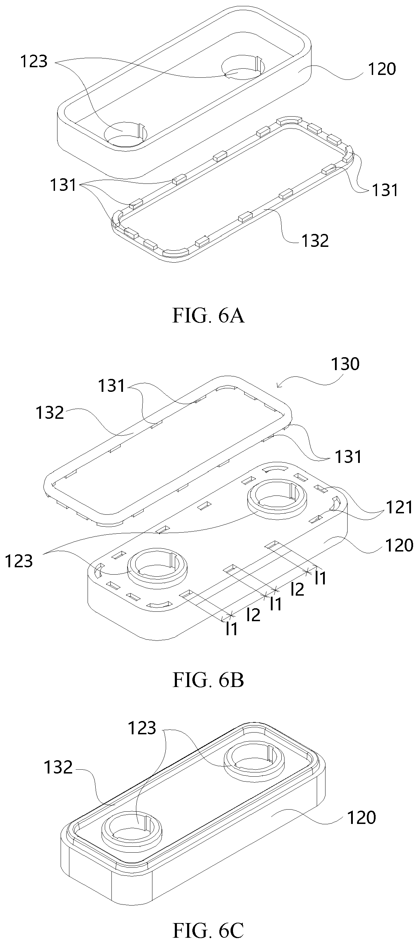

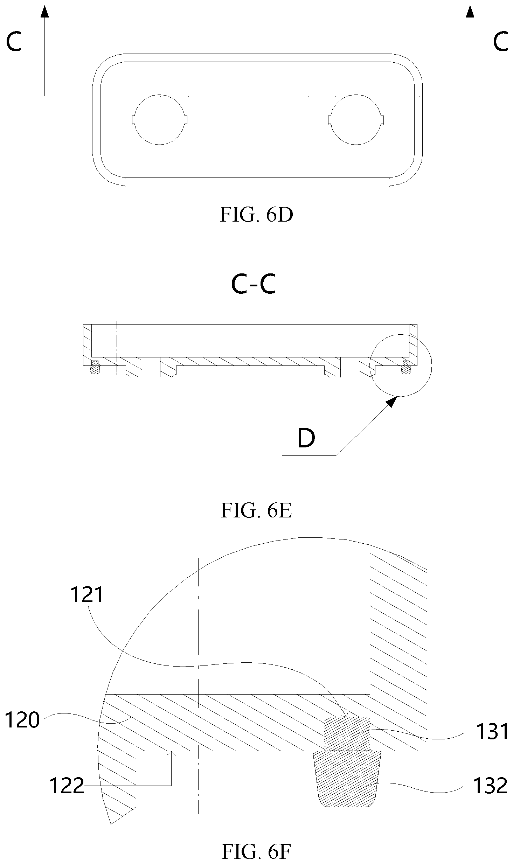

Referring to FIG. 5A to FIG. 6F, in some embodiments, the connecting portion 131 assumes a columnar shape, and all cross-sections of the connecting portion 131 are equal in area. In FIG. 6A and FIG. 6B, the connecting portion 131 includes a plurality of protruding structures oriented toward a plurality of accommodation recesses 121 on the first insulation component 120 relative to the sealing portion 132. All the protruding structures are in a columnar shape. Referring to FIG. 6F, in the thickness direction of the end cap assembly 100, the cross-sections of some protruding structures are rectangular and equal in area, and the cross-sections of some other protruding structures are in a sector ring shape and equal in area. The columnar connecting portion with an equalized cross-sectional area is simple in structure and facilitates manufacturing and molding.

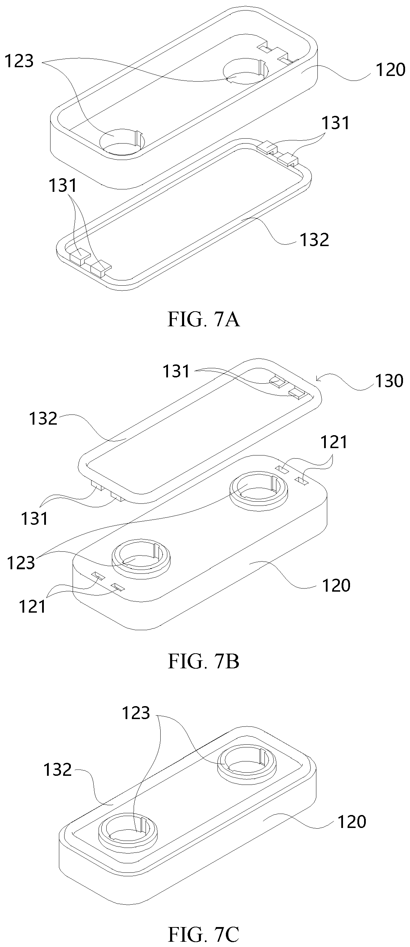

Referring to FIG. 7A to FIG. 8F, in some embodiments, the connecting portion 131 includes a first connecting section 131a and a second connecting section 131b. The second connecting section 131b is located on a side of the first connecting section 13 1a, the side being away from the sealing portion 132. A cross-sectional area of the second connecting section 131b is larger than a cross-sectional area of the first connecting section 131a.

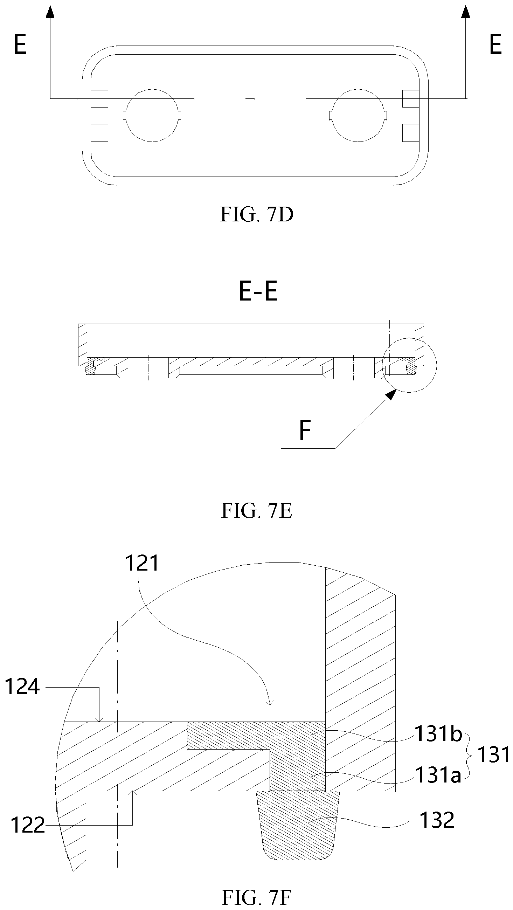

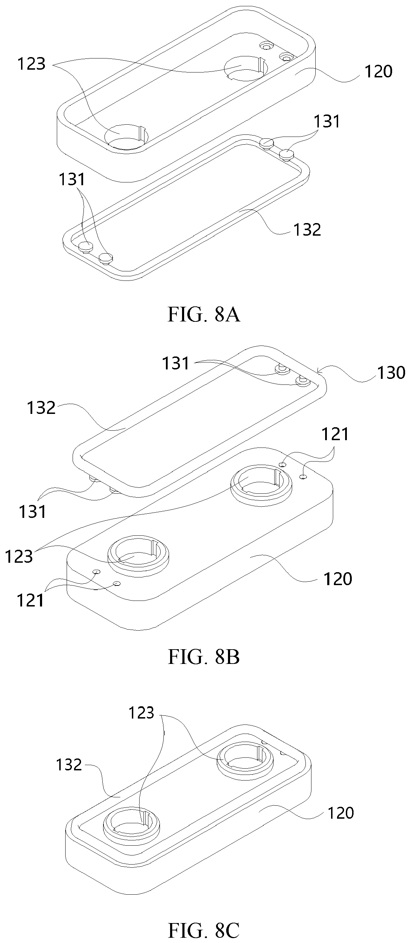

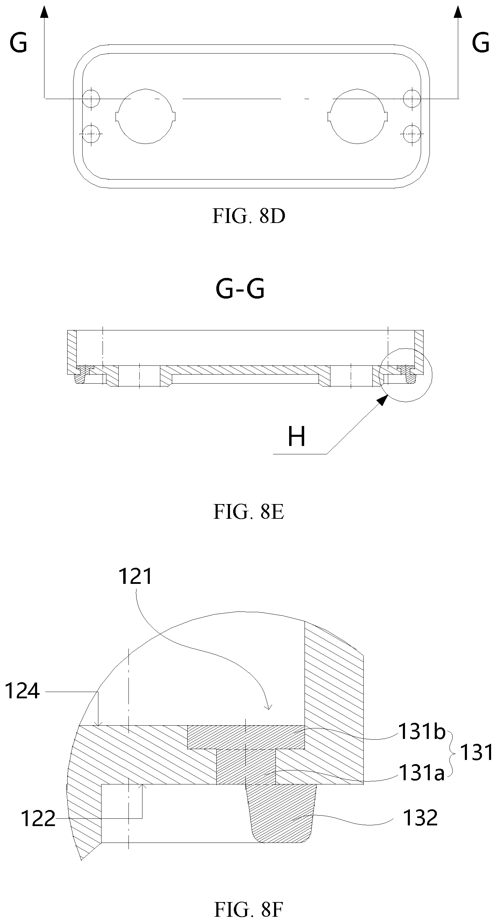

To easily distinguish the sealing portion 132, the first connecting section 131a, and the second connecting section 131b, both FIG. 7F and FIG. 8F schematically separate different parts through dashed lines. In the thickness direction of the end cap assembly 100, the cross-sectional area of the second connecting section 131b is larger than the cross-sectional area of the first connecting section 131a. The first connecting section 131a and the second connecting section 131b may be different sections separated on a connecting portion formed in one piece, or may be independently formed connecting portions that are connected to each other.

The second connecting section of the connecting portion is farther away from the sealing portion than the first connecting section, and is larger than the first connecting section in cross-sectional area. In this way, on the one hand, this increases a contact area between the connecting portion and the accommodation recess, and increases the strength of fixed bonding. On the other hand, this forms a compression component force between the second connecting section and the accommodation recess in a depth direction of the accommodation recess, so that the fixed connection between the connecting portion and the accommodation recess is tighter and less prone to fall apart.

Referring to FIG. 7A, FIG. 7B, FIG. 7F, FIG. 8A, FIG. 8B, and FIG. 8F, in some embodiments, the cover plate 110 includes a first surface 112 and a sealing recess 111 recessed in the first surface 112. At least a part of the sealing portion 132 is accommodated in the sealing recess 111. The first insulation component 120 includes a second surface 122 opposite to the first surface 112 and an accommodation recess 121 recessed in the second surface 122. The accommodation recess 121 includes an opening on both the second surface and a third surface 124 of the first insulation component 120, where the third surface is located on a side away from the cover plate 110.

The thickness of the cover plate is generally greater than the thickness of the first insulation component. Therefore, the sealing recess created in the first surface of the cover plate little impairs the strength and processing convenience of the cover plate. For the first insulation component 120, the third surface 124 thereof is located on the bottom plate on which an accommodation space is formed to accommodate the terminal plate 150. An opening of the accommodation recess 121 is created on the third surface 124 to allow exposure of the relatively wide second connecting section 131b. When a part configured to accommodate the sealing recess of the relatively wide second connecting section is formed in the first insulation component 120 by molding such as injection-molding, the opening of the third surface 124 can effectively simplify the molding process of the sealing element 130 and the first insulation component 120, and lower the requirements on the complexity of the mold.

Referring to FIG. 7F and FIG. 8F, in some embodiments, a longitudinal section of the accommodation recess 121 is in an inverted L shape or a T shape. For example, in FIG. 7F, along the thickness direction of the end cap assembly 100, the longitudinal section of the accommodation recess 121 is in an inverted L shape. Correspondingly, the width of the second connecting section 131b of the connecting portion 131 in the accommodation recess 121 in a transverse direction perpendicular to the thickness direction of the end cap assembly is greater than the width of the first connecting section 131a, and the second connecting section is aligned with the vertical plates that form the accommodation space configured to accommodate the terminal plate 150.

For another example, in FIG. 8F, along the thickness direction of the end cap assembly 100, the longitudinal section of the accommodation recess 121 is in a T shape. Correspondingly, the width of the second connecting section 131b of the connecting portion 131 in the accommodation recess 121 in the transverse direction perpendicular to the thickness direction of the end cap assembly is greater than the width of the first connecting section 13 1a, and the second connecting section 131b is centrally aligned with the first connecting section 131a.

This accommodation recess with an inverted-L-shaped or T-shaped longitudinal section forms a stepped cavity. In the stepped cavity, a relatively wide part corresponds to a relatively wide second connecting section, and a relatively narrow part corresponds to a relatively narrow first connecting section. In this way, on the one hand, the accommodation recess can match the connecting portion that includes the first connecting section and the second connecting section. On the other hand, a compression component force can be formed in the depth direction of the accommodation recess through the second connecting section and the stepped part at which the wide part meets the narrow part, thereby increasing the tightness of the fixed connection between the connecting portion and the accommodation recess.

Referring to FIG. 6F, FIG. 7F, and FIG. 8F, in some embodiments, the sealing portion 132 at least partially covers an opening of the accommodation recess 121. For example, in FIG. 8F, the sealing portion 132 is laterally offset outward relative to the opening of the accommodation recess 121 on the second surface 122, thereby partially covering the opening of the accommodation recess 121 on the second surface 122. The sealing portion at least partially covers the opening of the accommodation recess, thereby increasing the connection area between the sealing element and the accommodation recess, and between the sealing element and a surface of the accommodation recess outside the opening, increasing the bonding strength, making the sealing portion be supported by the surface outside the opening, and improving the connection stability. In addition, this partially covering structure can enlarge the sealing region formed by the sealing portion 132.

Referring to FIG. 6F and FIG. 7F, the sealing portion 132 fully covers the opening of the accommodation recess 121, and a width of the sealing portion 132 is greater than a width of the opening of the accommodation recess 121. In FIG. 6F and FIG. 7F, the part in contact with the second surface 122 on the sealing portion 132 fully covers the opening of the sealing recess 121, thereby enabling the sealing portion 132 to be more stably supported by the second surface 122.

In the above embodiment, the connecting portion 131 is in fit with an inner wall of the accommodation recess 121 without clearance. The fit without clearance here may be an interference fit between the connecting portion 131 and the sealing recess 121, or may be an integral connection relationship formed by injection-molding between the connecting portion 131 and the sealing recess 121.

The connecting portions fills the accommodation recess and is in fit with the inner wall of the accommodation recess without clearance, thereby achieving a larger contact area between the connecting portion and the accommodation recess, and in turn, improving the tightness of the fixed connection.

Referring to FIG. 6A to FIG. 8F, in some embodiments, the sealing portion 132 assumes a closed ring structure. The accommodation recess 121 includes a plurality of holes spaced apart along a circumferential direction of the closed ring structure. The plurality of holes here may be a plurality of blind holes, or a plurality of through-holes, or a combination of at least one blind hole and at least one through-hole. Corresponding to the accommodation recess shown in FIG. 6F, in the C-C sections shown in FIG. 6D and FIG. 6E, the sectioned accommodation recess 121 does not penetrate the bottom plate of the first insulation component 120. Corresponding to FIG. 7F and FIG. 8F, in the E-E section shown in FIG. 7D and FIG. 7E as well as the G-G section shown in FIG. 8D and FIG. 8E, the sectioned accommodation cavity 121 penetrates the bottom plate of the first insulation component 120.

In the A-A sections shown in FIG. 5A to FIG. 5C, the sectioning position is in a solid part of the first insulation component 120, and does not reach the accommodation recess 121 or the connecting portion in the accommodation recess 121. Therefore, just the sealing portion 132 of the sealing element 130 can be observed. In some other embodiments, the connecting portion 131 and the accommodation recess 121 may be continuous along the circumferential direction of the closed ring structure of the sealing portion to form a closed ring.

The closed-ring-shaped sealing portion in the sealing element can form a closed-ring-shaped sealing region to ensure a good sealing effect. The connecting portion in the sealing element can be connected to a plurality of holes included in the accommodation recess and spaced apart along a circumferential direction of the closed ring structure. In this way, a bonding force of the fixed connection between the connecting portion and the accommodation recess is discretely distributed in the circumferential direction of the closed ring structure, the bonding force is distributed more uniformly, and the overall bonding strength is increased.

Referring to FIG. 6B, FIG. 7B, and FIG. 8B, in some embodiments, the plurality of holes are arranged symmetrically with respect to a centerline of the closed ring structure in at least one direction. For example, in FIG. 6B, the closed-ring structure resembles a rounded rectangle, and includes a long edge and a short edge. With respect to the centerlines of the long edge and the short edge, the plurality of holes of the sealing recess are symmetrically arranged. For another example, in FIG. 7B and FIG. 8B, the sealing recess includes no holes at the position corresponding to the long edge, but includes only two holes symmetrically at the positions corresponding to the two lateral short edges respectively with respect to the centerline of the long edge.

The plurality of holes in the accommodation recess may be arranged symmetrically with respect to the centerline of a plane in which the closed ring structure is located, where the centerline is in one direction or two directions perpendicular to each other. In this way, the bonding force by which the plurality of holes are connected to the connecting portion can keep uniform in the one direction or the two directions perpendicular to each other, and therefore, the holes are less prone to be disconnected from the connecting portion.

Referring to FIG. 6B, in some embodiments, a sum of lengths of the plurality of holes in the circumferential direction of the closed ring structure is less than a sum of lengths of all solid parts between every two adjacent holes in the circumferential direction of the closed ring structure. In FIG. 6B, the plurality of discretely distributed holes form an arrangement that alternate cavities and solids in the circumferential direction of the closed-ring structure. In the circumferential direction of the closed-ring structure, the lengths 11 of the holes may be identical or different, and the lengths of the solid parts between different holes may be identical or different.

The sum of the lengths of the solid parts between every two adjacent holes is set to be greater than the sum of the lengths of the holes, thereby ensuring relatively high strength of the surface with the accommodation recess, and reducing or avoiding the risk of falling off together with the connecting portion as a whole due to insufficient strength of the surface.

Referring to FIG. 6B, FIG. 7A, FIG. 7B, FIG. 8A, and FIG. 8B, in some embodiments, cross-sectional shapes of the accommodation recess 121 include at least one of a polygon, a circle, an ellipse, or a sector ring. Polygons include a triangle, a rectangle, a rhombus, a hexagon, an octagon, and the like. For example, in FIG. 6B, the cross-sectional shapes of the accommodation recess 121 include a rectangle and a sector ring shape. In FIG. 7A and FIG. 7B, the cross-sectional shapes of the accommodation recess 121 include a rectangle. In FIG. 8A and FIG. 8B, the cross-sectional shapes of the accommodation recess 121 include a circle.

The cross-sectional shapes of the accommodation recess 121 here may be selected depending on various factors such as the location and size of the accommodation recess, and at least one of various cross-sectional shapes may be selected, thereby improving the adaptability of the connection structure.

In the above embodiment, a material of the sealing element 130 may be different from a material of the at least one of the first insulation component 120 or the cover plate 110, the at least one including the accommodation recess 121. In this way, the material of the sealing element is different from the material of at least one of the first insulation component or the cover plate, where the at least one includes an accommodation recess, so as to meet various requirements such as sealing degree, molding process, and cost, and improve the design flexibility. For example, the sealing element 130 is made of soft plastic (such as ethylene-propylene-diene monomer), and the first insulation component 120 with the accommodation recess 121 is made of hard plastic (such as polypropylene).

In some other embodiments, the material of the sealing element 130 may be identical to the material of the at least one of the first insulation component 120 or the cover plate 110, the at least one including the accommodation recess 121.

To improve the bonding strength between the sealing element 130 and the at least one of the first insulation component 120 or the cover plate 110, the at least one including the accommodation recess 121, in some embodiments, the sealing element 130 is formed in one piece together with the at least one of the first insulation component 120 or the cover plate 110 through an injection molding process, the at least one including the accommodation recess 121. If the material of the sealing element 130 is different from the material of at least one of the first insulation component 120 or the cover plate 110, the at least one including the accommodation recess 121, the sealing element may be formed in one piece together with the at least one through a two-shot injection molding process. Compared with the fixed connection manners such as adhesion or riveting, the one-piece injection molding can achieve high bonding strength in a relatively small assembling space, thereby increasing the bonding force, simplifying the assembling steps, and improving the production efficiency.

When the first insulation component is in press-fit with the cover plate, compared with the compression force borne by other parts, a greater compression force needs to be borne by the sealing element and the at least one of the first insulation component 120 or the cover plate 110, the at least one including the accommodation recess 121. Therefore, in some embodiments, the hardness of the material of the sealing element 130 may be caused to be lower than the hardness of the material of the at least one of the first insulation component 120 or the cover plate 110, the at least one including the accommodation recess 121. For example, the sealing element 130 is made of soft plastic (such as ethylene-propylene-diene monomer), and the first insulation component 120 with the accommodation recess 121 is made of hard plastic (such as polypropylene). The hardness means the ability of a material to locally resist a hard object being pressed into the surface of the material. The hardness referred to here is indentation hardness.

In this way, the sealing element is made of a material of relatively low hardness, so that a better sealing effect can be achieved through deformation of the sealing element when the first insulation component is in press-fit with the cover plate, thereby avoiding impairment of the sealing effect caused by relatively large deformation of the at least one of the first insulation component 120 or the cover plate 110 under pressure, the at least one including the accommodation recess 121.

The above embodiments of the end cap assembly according to the present disclosure are applicable to various battery cells. For a battery cell that employs the above end cap assembly embodiment, the battery cell can effectively prevent the housing from being electrified, and achieve higher structural stability.

The battery cell embodiment according to the present disclosure are applicable to various batteries. For a battery that employs the above battery cell embodiment, the battery obtains energy from the above battery cell embodiment, thereby effectively preventing the housing from being electrified and improving the safety performance and lifespan of the battery.

The battery embodiment according to the present disclosure is applicable to various devices that need to use a battery. For a device that uses the above battery embodiment, the device obtains energy from the above battery embodiment, thereby effectively preventing the housing from being electrified and improving the performance of the device.

Some embodiments of the present disclosure have been described in detail above. Some details known in the art are omitted in order to avoid obscuring the concept of the present disclosure. Based on the above description, a person skilled in the art is clearly aware of how to implement the technical solutions disclosed herein.

Although the present disclosure has been described in detail with reference to specific embodiments by using examples, a person skilled in the art understands that the examples are merely intended to illustrate the present disclosure rather than restrict the scope of the present disclosure. A person skilled in the art understands that modifications may be made to the above embodiments or equivalent replacements may be made to some technical features thereof without departing from the scope and spirit of the present disclosure. The scope of the present disclosure is subject to the claims appended hereto.

## Claims

1. An end cap assembly applicable to a battery cell, comprising:
a cover plate (110), configured to close a housing (300) of the battery cell;
a terminal plate (150), located on a side of the cover plate (110), the side being away from the housing (300);
a first insulation component (120), at least partially located between the terminal plate (150) and the cover plate (110);
an electrode terminal (140), penetrating the cover plate (110) and the first insulation component (120), connected to the terminal plate (150), and configured to input or output electrical energy; and
a sealing element (130), comprising a sealing portion (132) and a connecting portion (131) connected to the sealing portion (132), wherein the sealing portion (132) is disposed between a first insulation component (120) and the cover plate (110) to form a sealing region around the electrode terminal (140), wherein
at least one of the first insulation component (120) or the cover plate (110) comprises an accommodation recess (121), and at least a part of the connecting portion (131) is accommodated in the accommodation recess (121) to fixedly fit the accommodation recess (121).

2. The end cap assembly according to claim 1, wherein the connecting portion (131) assumes a columnar shape, and all cross-sections of the connecting portion (131) are equal in area.

3. The end cap assembly according to claim 1, wherein the connecting portion (131) comprises a first connecting section (131a) and a second connecting section (131b); the second connecting section (131b) is located on a side of the first connecting section (131a), the side being away from the sealing portion (132); and a cross-sectional area of the second connecting section (131b) is larger than a cross-sectional area of the first connecting section (131a).

4. The end cover assembly according to claim 3, wherein the cover plate (110) comprises a first surface (112) and a sealing recess (111) recessed in the first surface (112); at least a part of the sealing portion (132) is accommodated in the sealing recess (111); the first insulation component (120) comprises a second surface (122) opposite to the first surface (112) and an accommodation recess (121) recessed in the second surface (122); and the accommodation recess (121) comprises an opening on both the second surface and a third surface (124) of the first insulation component (120), wherein the third surface is located on a side away from the cover plate (110).

5. The end cap assembly according to claim 3, wherein a longitudinal section of the accommodation recess (121) is in an inverted L shape or a T shape.

6. The end cap assembly according to claim 1, wherein the sealing portion (132) at least partially covers an opening of the accommodation recess (121).

7. The end cap assembly according to claim 6, wherein the sealing portion (132) fully covers the opening of the accommodation recess (121), and a width of the sealing portion (132) is greater than a width of the opening of the accommodation recess (121).

8. The end cap assembly according to claim 1, wherein the connecting portion (131) is in fit with an inner wall of the accommodation recess (121) without clearance.

9. The end cap assembly according to claim 1, wherein the sealing portion (132) assumes a closed ring structure, and the accommodation recess (121) comprises a plurality of holes spaced apart along a circumferential direction of the closed ring structure.

10. The end cap assembly according to claim 9, wherein the plurality of holes are arranged symmetrically with respect to a centerline of the closed ring structure in at least one direction.

11. The end cap assembly according to claim 9, wherein a sum of lengths of the plurality of holes in the circumferential direction of the closed ring structure is less than a sum of lengths of all solid parts between every two adjacent holes in the circumferential direction of the closed ring structure.

12. The end cap assembly according to claim 1, wherein cross-sectional shapes of the accommodation recess (121) comprise at least one of a polygon, a circle, an ellipse, or a sector ring.

13. The end cap assembly according to claim 1, wherein the cover plate (110) comprises a first through-hole (114), the first insulation component (120) comprises a second through-hole (123), the electrode terminal (140) penetrates the first through-hole (114) and the second through-hole (123) along a thickness direction of the cover plate (110), and both the first through-hole (114) and the second through-hole (123) are located in the sealing region.

14. The end cap assembly according to claim 1, wherein a material of the sealing element (130) is different from a material of the at least one of the first insulation component (120) or the cover plate (110), the at least one comprising the accommodation recess (121).

15. The end cap assembly according to claim 14, wherein the sealing element (130) is formed in one piece together with the at least one of the first insulation component (120) or the cover plate (110) through an injection molding process, the at least one comprising the accommodation recess (121).

16. The end cap assembly according to claim 14, wherein hardness of the material of the sealing element (130) (130) is lower than hardness of the material of the at least one of the first insulation component (120) or the cover plate (110), the at least one comprising the accommodation recess (121).

17. A battery cell, comprising:
an electrode assembly (200);
a housing (300), configured to accommodate the electrode assembly (200), wherein an end portion of the housing (300) is opened; and
the end cap assembly (100) according to any one of claims 1 to 16, wherein the end cap assembly (100) is disposed at the end portion of the housing (300).

18. The battery cell according to claim 17, further comprising:
a negative end cap assembly (100N), located on one side of the electrode assembly (200); and
a positive end cap assembly (100P), located on another side of the electrode assembly (200), wherein
both end portions of the housing (300) are opened, and the negative end cap assembly (100N) and the positive end cap assembly (100P) fit and cover the two end portions of the housing (300) respectively; and the negative end cap assembly (100N) is the end cap assembly (100).

19. The battery cell according to claim 18, wherein the positive end cap assembly (100P) comprises an injection port (113).

20. A battery, comprising the battery cell according to any one of claims 17 to 19.

21. An electrical device, comprising the battery according to claim 20.
